(19)

Europäisches
Patentamt

European
Patent Office

Office européen
des brevets

(11) **EP 2 600 173 A1**

(12) **EUROPÄISCHE PATENTANMELDUNG**

(43) Veröffentlichungstag:
05.06.2013 Patentblatt 2013/23

(51) Int Cl.:
*G01S 17/42* (2006.01)       *G01S 17/89* (2006.01)
*G01C 15/00* (2006.01)

(21) Anmeldenummer: 11191195.4

(22) Anmeldetag: 29.11.2011

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Hexagon Technology Center GmbH**
**9435 Heerbrugg (CH)**

(72) Erfinder:
• **Stutz, Reto**
**CH-9442 Berneck (CH)**

• **Aebischer, Beat**
**CH-9435 Heerbrugg (CH)**
• **Rohner, Marcel**
**CH-9410 Heiden (CH)**
• **Bednarek, Ingo**
**CH-9435 Heerbrugg (CH)**

(74) Vertreter: **Gyaja, Christoph Benjamin**
**Kaminski Harmann**
**Patentanwälte AG**
**Landstrasse 124**
**9490 Vaduz (LI)**

(54) **Verfahren zum Betreiben eines Laserscanners**

(57)     Die Erfindung betrifft ein Verfahren zum Betreiben eines Laserscanners (1) mit den folgenden Schritten: Abtasten von mindestens drei Raumpunkten eines Objekts (2, 2'); Ermitteln eines Entfernungsvektors (E) mit mindestens einer Koordinate (r, θ, φ) vom Laserscanner (1) zum abgetasteten Raumpunkt des Objekts (2, 2'); Bestimmen eines Nahbereichs (N) mit mindestens zwei Raumpunkten, die in einem Winkelraum benachbart zu einem zentralen Raumpunkt (S) sind; und Aggregation von Koordinaten (r, θ, φ) der ermittelten Entfernungsvektoren (E) im bestimmten Nahbereich (N).

Fig. 3

EP 2 600 173 A1

**Beschreibung**

Die Erfindung betrifft ein Verfahren zum Betreiben eines Laserscanners nach dem unabhängigen Anspruch 1.

DE10150436A1 beschreibt einen Laserscanner zum berührungslosen Abtasten (Scannen) eines beliebigen entfernten Objekts in drei Dimensionen (3D). Von einer Laserquelle erzeugtes Licht wird über einen Spiegel auf das abzutastende Objekt gerichtet, und vom abgetasteten Objekt reflektiertes Licht wird über den Spiegel umgelenkt und von einem Detektor erfasst. Durch Verstellen des Spiegels scannt Licht in zeitlicher Abfolge über eine Vielzahl verschiedener Punkte des Objekts. Das abzutastende Objekt im Sinne der Erfindung kann auch eine aus mehreren physikalischen Objekten bestehende Szenerie sein, wie etwa mehrere Bäume, Personen, Häuser, usw..

Die Funktionsweise des Laserscanners basiert somit auf der Wechselwirkung von Licht mit Punkten des abzutastenden Objekts. Im Sinne der Erfindung wird dieser physikalische Vorgang als Streuung bzw. Reflexion von Licht an Raumpunkten des Objekts verallgemeinert. Die Spiegelstellungen des Laserscanners zu den Raumpunkten des Objekts werden als Elevations- oder Polarwinkel $\theta$ und Horizontal- oder Azimutwinkel $\varphi$ über Winkelsensoren ermittelt. Die Winkel $\theta$, $\varphi$ bilden einen Winkelraum. Die Spiegel werden schrittweise oder kontinuierlich gedreht. Die Laserquelle, der Detektor und die Winkelsensoren geben Zustandssignale an eine Steuereinheit aus. Die Zustandssignale geben den Zustand des Laserscanners zum Zeitpunkt des Abtastens eines Raumpunkts an. Die Steuereinheit misst für jeden abgetasteten Raumpunkt entweder Pulslaufzeiten des erzeugten und erfassten Lichts oder sie misst eine Phasenverschiebung zwischen dem erzeugten Licht und dem erfassten Licht. Die Steuereinheit ermittelt aus solchen Messdaten eine Distanz r vom Laserscanner zum abgetasteten Raumpunkt. Das Betreiben des Laserscanners wird in zeitlicher Abfolge zum Ermitteln einer Vielzahl von Distanzen r und Winkel $\theta$, $\varphi$ wiederholt. Zu jedem Raumpunkt wird ein Entfernungsvektor mit der Distanz r und den Winkeln $\theta$, $\varphi$ als Koordinaten ermittelt.

Ein solcher Laserscanner wird von der Anmelderin unter dem Namen Scanstation C10 kommerziell vertrieben. Dieser Laserscanner misst Pulslaufzeiten und realisiert Einzelmessungen von Raumpunkten. Der Laserscanner weist ein Sichtfeld von 360° x 270° auf; über eine Entfernung von 0.1m bis 300m ermittelt er bis zu $0.5*10^6$ Entfernungsvektoren pro Sekunde; im Entfernungsbereich von 1m bis 50m wird die Koordinatenposition des Objekts mit einer Messgenauigkeit von 6mm und die Distanz r des Objekts mit einer Messgenauigkeit von 4mm ermittelt.

Die Messgenauigkeit wird von verschiedenen Arten von schwer zu quantifizierendem Rauschen der ausgegebenen Zustandssignale begrenzt. Beispielsweise entsteht Rauschen durch thermisches Rauschen des Detektors, durch Quantisierungsrauschen der Photonen im Detektor, durch lokale Spitzen in der im Detektor verwendeten Avalanche Photodiode oder Pin Diode. Auch entsteht Rauschen durch Photonen des Hintergrundlichts. Bei kurzen Entfernungen beeinträchtigt Schrotrauschen die Messgenauigkeit, welches Schrottrauschen durch Fluktuationen der ankommenden Signalphotonen erzeugt wird. Eine erste Aufgabe der Erfindung besteht darin, ein verbessertes Verfahren zum Betreiben eines Laserscanners bereitzustellen. Eine zweite Aufgabe der Erfindung besteht darin, ein Verfahren zum Betreiben eines Laserscanners bereitzustellen, das ein Objekt sehr rasch und mit sehr hoher Messgenauigkeit abtastet. Eine dritte Aufgabe der Erfindung besteht darin, einen bestehenden Laserscanner auf einfache Art und Weise aufzurüsten, um ein Objekt sehr rasch und mit sehr hoher Messgenauigkeit abzutasten.

Zumindest eine dieser Aufgaben wird durch die kennzeichnenden Merkmale des unabhängigen Anspruchs oder der abhängigen Ansprüche gelöst.

Erfindungsgemäß weist das Verfahren zum Betreiben eines Laserscanners die folgenden Schritte auf: Abtasten von mindestens drei Raumpunkten eines Objekts; Ermitteln eines Entfernungsvektors mit mindestens einer Koordinate vom Laserscanner zum abgetasteten Raumpunkt des Objekts; Bestimmen eines Nahbereichs mit mindestens zwei Raumpunkten, die in einem Winkelraum benachbart zu einem zentralen Raumpunkt sind; und Aggregation von Koordinaten der ermittelten Entfernungsvektoren im bestimmten Nahbereich.

Es hat sich herausgestellt, dass beim Betreiben eines Laserscanners eine Aggregation von Koordinaten der ermittelten Entfernungsvektoren in einem bestimmten Nahbereich die Oberflächengenauigkeit des abzutastenden Objekts erhöht. Erfindungsgemäß werden die vom Laserscanner ermittelten Entfernungsvektoren bearbeitet, entweder in Echtzeit oder mit zeitlicher Verzögerung. Dazu wird ein Nahbereich von abgetasteten Raumpunkten gebildet. Einer der abgetasteten Raumpunkte des Nahbereichs wird als zentraler Raumpunkt bestimmt und mindestens zwei abgetastete Raumpunkte werden als im Winkelraum benachbart zu diesem zentralen Raumpunkt bestimmt. Koordinaten von ermittelten Entfernungsvektoren im Nahbereich werden aggregiert, was zu einer Minimierung des Messfehlers führt.

Aggregation im Sinne der Erfindung bezeichnet ein Filtern der Koordinaten von ermittelten Entfernungsvektoren im Nahbereich zu einem zentralen Raumpunkt; beim Filtern werden Koordinateninformationen der Raumpunkte, vorzugsweise die Koordinateninformationen aller Raumpunkte im Nahbereich berücksichtigt; und die Koordinate des ermittelten Entfernungsvektors zum zentralen Raumpunkt wird durch eine aggregierte Koordinate ersetzt. Diese Aggregation wird für weitere erfasste Raumpunkte, vorzugsweise für alle erfassten Raumpunkte wiederholt. Dazu wird ein weiterer Nahbereich zu einem weiteren zentralen Raumpunkt bestimmt, und weitere abgetastete Raumpunkte werden als im Winkelraum benachbart zu diesem weiteren zentralen Raumpunkt bestimmt. Bei der Aggregation erfolgt somit keine Datenreduktion, weder wird die Anzahl der Raumpunkte reduziert, noch wird die Anzahl der Koordinaten reduziert.

Dabei wird von drei Nebenbedingungen ausgegangen: i) die Scannschrittgröße von einem Raumpunkt zum nächsten Raumpunkt ist weitgehend konstant, ii) die Oberfläche des abzutastenden Objekts ist weitgehend kontinuierlich, und iii) die Scannschrittgröße ist in der Größenordnung der Kontinuität der Oberfläche des abzutastenden Objekts. Eine solche Aggregation von Koordinaten erfolgt mit geringem technischem Aufwand und sehr rasch.

Vorteilhafte Weiterbildungen der Erfindung ergeben sich aus den Merkmalen der abhängigen Ansprüche.

Vorteilhafterweise wird als Koordinate eine Distanz und/oder mindestens ein Winkel verwendet.

Die Koordinate ist eine Distanz und/oder ein Winkel. Die Distanz kann die direkte Entfernung vom Laserscanner zum abgetasteten Raumpunkt des Objekts sein. Die Aggregation von Koordinaten lässt sich somit für verschiedene Parameter des Verfahrens zum Betreiben eines Laserscanners gezielt durchführen, was den Messfehler reduziert und damit die Oberflächengenauigkeit beim Abtasten erhöht.

Vorteilhafterweise wird die Koordinate des ermittelten Entfernungsvektors zum zentralen Raumpunkt durch die Aggregation von Koordinaten der ermittelten Entfernungsvektoren im bestimmten Nahbereich, vorzugsweise durch einen Mittelwert von Koordinaten der ermittelten Entfernungsvektoren im bestimmten Nahbereich ersetzt.

Somit lässt sich ein ermittelter Entfernungsvektor durch eine Aggregation von Koordinaten, vorzugsweise durch einen Mittelwert unter Berücksichtigung von Nebenbedingungen gezielt ersetzen, was den Messfehler reduziert und damit die Oberflächengenauigkeit beim Abtasten erhöht.

Vorteilhafterweise wird die Aggregation von Koordinaten der ermittelten Entfernungsvektoren im bestimmten Nahbereich durch einen einstellbaren Filter gewichtet.

Somit wird die Aggregation der Koordinaten im Nahbereich gebildet durch einen einstellbaren Filter gewichtet, wodurch der Informationsgehalt des ermittelten Entfernungsvektors in objektiv nachvollziehbarer Weise unverfälscht erhalten bleibt. So wird die Standardabweichung des Rauschens durch den Filter verringert.

Vorteilhafterweise wird das Bestimmen des Nahbereichs und die Aggregation von Koordinaten für solche Raumpunkte des Nahbereichs durchgeführt, deren gemessene Distanzen r sich von der im zentralen Raumpunkt gemessenen Distanz $r_0$ um nicht mehr als einen vordefinierten Schwellenwert unterscheiden.

Der vordefinierte Schwellenwert erlaubt eine Anpassung des Verfahrens an Abweichungen von einer oder mehreren der Nebenbedingungen i) bis iii), d.h. an nicht konstante Scannschrittgrößen, an diskontinuierliche Oberflächen des abzutastenden Objekts, oder an Scannschrittgrößen, die nicht in der Größenordnung der Kontinuität des abzutastenden Objekts sind. Eine solche Anpassung an die Dynamik der Oberfläche des Objekts ist erwünscht. Solche Abweichungen erfolgen an Kanten, Vorsprüngen des Objekts. Beispielsweise werden mehrere Objekte wie ein Gebäude und ein Baum abgetastet, wobei das Gebäude im Sichtfeld des Laserscanners zumindest teilweise vom Baum verdeckt wird, der Baum steht vor dem Gebäude. Zwischen Baum und Gebäude besteht eine Diskontinuität, die der Realität entspricht und erwünscht ist. Ein Filtern dieser Diskontinuität würde den Informationsgehalt der ermittelten Entfernungsvektoren verfälschen.

Weitere Vorteile und Merkmale der Erfindung sind aus der folgenden Beschreibung von bevorzugten Ausführungsformen im Zusammenhang mit den anhängenden Figuren beispielhaft und schematisch ersichtlich.

Figur 1 zeigt eine Ansicht eines Teils einer Ausführungsform eines Laserscanners;

Figur 2 zeigt einen Schnitt durch den Laserscanner nach Figur 1;

Figur 3 zeigt ein Flussdiagramm der Schritte des Verfahrens zum Betreiben des Laserscanners nach Figur 1;

Figur 4 zeigt eine erste Ausführungsform der Aggregation von Koordinaten ermittelter Entfernungsvektoren im Verfahren nach Figur 3;

Figur 5 zeigt eine zweite Ausführungsform der Aggregation von Koordinaten ermittelter Entfernungsvektoren im Verfahren nach Figur 3;

Figur 6 zeigt eine dritte Ausführungsform der Aggregation von Koordinaten ermittelter Entfernungsvektoren im Verfahren nach Figur 3; und

Figur 7 und 8 sind andere Darstellungen in einer der Ausführungsformen nach Figur 4 bis 6 der Aggregation von Koordinaten ermittelter Entfernungsvektoren im Verfahren nach Figur 3.

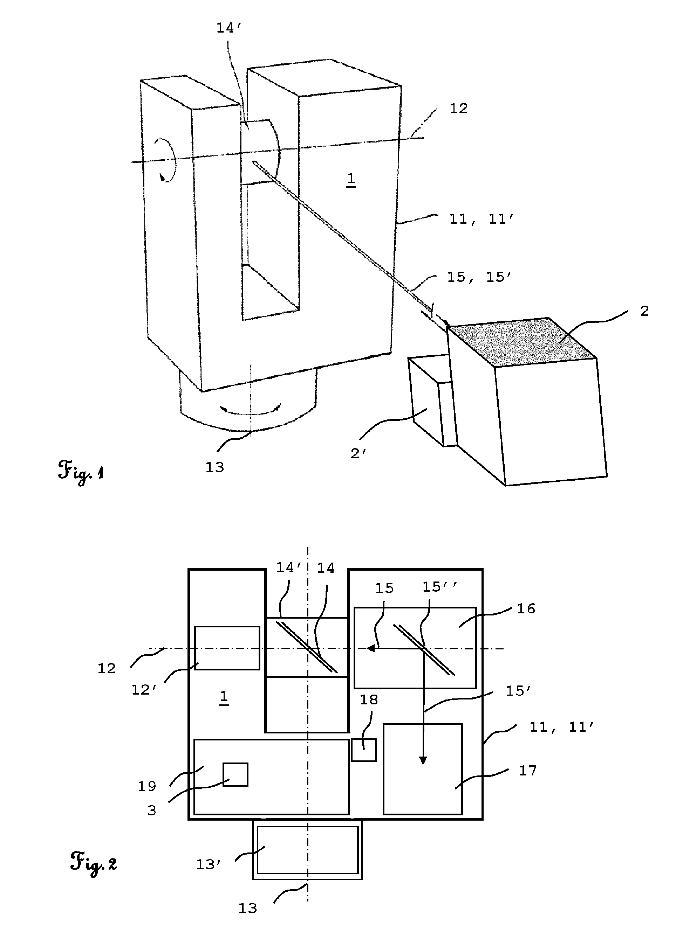

Figur 1 ist eine Prinzipdarstellung eines Laserscanners 1 zum berührungslosen Abtasten eines entfernten Objekts 2, 2' in drei Dimensionen (3D) oder in zwei Dimensionen (2D). Der Laserscanner 1 kann zur speziellen Überwachung, Erfassung, Digitalisierung, usw. von statischen oder dynamischen Objekten 2, 2' geeignet sein, der Laserscanner 1 kann aber auch ein geodätisches Multifunktionsgerät wie ein Tachymeter, eine Totalstation, usw. bei der allgemeinen Ingenieur- und Bauvermessung von Objekten 2, 2' sein. Das Objekt 2, 2' besteht schematisch aus einem ersten Würfel 2 und einem zweiten Würfel 2', wobei das Sichtfeld des Laserscanners 1 auf den ersten Würfel 2 teilweise vom zweiten Würfel 2' verdeckt wird. Prinzipiell lassen sich beliebig viele Objekte 2, 2' abtasten. Der Laserscanner 1 kann durch 360°-Schwenkungen um zwei Schwenkachsen ein Vollpanorama mit einem Sichtfeld von 360° x 360° abtasten und so eine Szenerie mit mehreren Objekten vollständig abtasten.

Der Laserscanner 1 weist eine statische Basis als Unterteil und eine verschwenkte Stütze 11 auf. Die Stütze 11 umfasst einen ersten Antrieb 12' einer Kippachse oder horizontalen Schwenkachse 12 und einen zweiten Antrieb 13' für eine Stehachse oder vertikale Schwenkachse 13. Ein 2D-Laserscanner weist nur einen solchen Antrieb auf. Der erste Antrieb 12' und der zweite Antrieb 13' werden über Stellgrößen angesteuert. Ein Ablenkkopf 14' ist beispielsweise um 360° um die horizontale Schwenkachse 12 schwenkbar und um 360° um die vertikale Schwenkachse 13 schwenkbar. Während die Stütze 11 aus einem soliden Gehäuse 11' mit hoher Steifigkeit aufgebaut ist, besteht der Ablenkkopf 14' aus möglichst wenigen und leichten Bauteilen um hohe Umdrehungszahlen der horizontalen Schwenkachse 12 zu ermöglichen. Der Laserscanner 1 weist eine nicht dargestellte elektrische Stromversorgung der Bestandteile des Laserscanners 1 auf.

Figur 2 zeigt einen Schnitt durch das Gehäuse 11' der Stütze 11. Eine in der Stütze 11 angeordnete Laserquelle 16 erzeugt Licht 15, das in der horizontalen Schwenkachse 12 auf einen Spiegel 14 gerichtet wird und das durch Verschwenken der Stütze 11 über den Spiegel 14 auf das abzutastende Objekt 2 gerichtet wird. Am Objekt 2, 2' gestreutes bzw. reflektiertes Licht 15' wird über den Spiegel 14 umgelenkt und von mindestens einem in der Stütze 11 angeordneten Detektor 17 erfasst. Ein Ablenkspiegel 15" lenkt das erfasste Licht 15' aus der horizontalen Schwenkachse 12 auf den Detektor 17. Die Laserquelle 16 ist ein aktives Sensorsystem. Das Licht 15, 15' besteht aus elektromagnetischen Wellen wie Radiowellen, Mikrowellen, sichtbares Licht, Röntgenstahlung, Gammastrahlung, usw.. Der Detektor 17 ist eine Avalanche Photodiode, eine Pin Diode, usw.. Mindestens ein Winkelsensor 18 ermittelt die Verschwenkstellungen des Spiegels 14; dies erfolgt beispielsweise durch Erfassen von durch das Verschwenken des Spiegels 14 gebildeten Relativbewegungen von optischen Marken zu einer Referenz. Der Winkelsensor 18 erfasst somit den ersten Winkel, den Horizontal- oder Azimutswinkels $\varphi$ der vertikalen Schwenkachse 13 zum abgetasteten Raumpunkt des Objekts 2, 2' und den zweiten Winkel, den Elevations- oder Polarwinkel $\theta$ der horizontalen Schwenkachse 12 zum abgetasteten Raumpunkt des Objekts 2, 2'.

Die Laserquelle 16, der Detektor 17 und der Winkelsensor 18 geben Zustandssignale an eine Steuereinheit 19 aus. Die Zustandssignale geben den Zustand des Laserscanners 1 zum Zeitpunkt des Abtastens eines Raumpunkts an. Die Steuereinheit 19 wertet die Zustandssignale aus. Dazu misst die Steuereinheit 19 für jeden abgetasteten Raumpunkt entweder Pulslaufzeiten des erzeugten Lichts 15 und des erfassten Lichts 15' oder eine Phasenverschiebung zwischen dem erzeugten Licht 15 und dem erfassten Licht 15'. Aus der gemessenen Pulslaufzeiten oder Phasenverschiebung ermittelt die Steuereinheit 19 eine Distanz r des Entfernungsvektors E für die Entfernung zwischen dem Laserscanner 1 und dem abgetasteten Raumpunkt des Objekts 2, 2'. Der ermittelte Entfernungsvektor E wird als 3D-Tripel bezogen auf ein $(r, \theta, \varphi)$-Koordinatensystem in einem computerlesbaren Datenspeicher der Steuereinheit 19 gespeichert. Der ermittelte Entfernungsvektor E weist als Koordinaten die Distanz r, den Azimutswinkel $\varphi$ und den Polarwinkel $\theta$ auf. Die Steuereinheit 19 erzeugt Stellgrößen für den ersten Antrieb 12' und den zweiten Antrieb 13' zum Verschwenken des Spiegels 14 um eine einstellbare Scannschrittgröße. Der Spiegel 14 wird beim Messen von Pulslaufzeiten schrittweise oder beim Messen der Phasenverschiebung kontinuierlich gedreht. Die Scannschrittgröße des Azimutswinkels $\varphi$ und die Scannschrittgröße des Polarwinkel $\theta$ sind dementsprechend frei einstellbar. Das Betreiben des Laserscanners 1 wird in zeitlicher Abfolge für eine Vielzahl von Entfernungsvektoren E fortlaufend wiederholt. Der Fachmann kann anstatt eines spaltenweise erfolgenden Abtastens um Schwenkachsen des Laserscanners auch ein beliebig spiralförmiges Abtasten realisieren. Auch kann der Fachmann anstatt einer Laserquelle ein anderes aktives Sensorsystem wie Mikrowellensensoren, Ultraschallsensoren, usw. verwenden. Zudem kann der Fachmann anstatt eines $(r, \theta, \varphi)$-Koordinatensystems natürlich auch ein kartesisches Koordinatensystem verwenden.

Der Laserscanner 1 weist eine Auswertungseinheit 3 auf. Die Auswertungseinheit 3 kann wie in Figur 2 dargestellt, integrativer Bestandteil der Steuereinheit 19 sein; die Auswertungseinheit 3 kann aber auch eine eigenständige Einheit sein, die körperlich vom Laserscanner 1 und der Steuereinheit 19 getrennt ist, beispielsweise ein ortsfester Computer wie ein Personalcomputer (PC) oder ein mobiler Computer wie ein Laptop, Smartphone, usw.. Wenn die Auswerteeinheit 3 integrativer Bestandteil der Steuereinheit 19 ist hat das verglichen mit einer körperlich vom Laserscanner 1 und der Steuereinheit 19 getrennten Auswerteeinheit 3 den Vorteil, dass die Auswertung deutlich schneller erfolgt; zudem können ermittelte Entfernungsvektoren E durch Datenspeicherung und Datentransport nachteilig verändert werden, beispielsweise an Dynamik verlieren oder verrauschen; auch kann dann die Aggregation auf die meist proprietäre Software und Hardware des Laserscanners 1 abgestimmt werden, so können beispielsweise nur solche Distanzen r aggregiert werden, von denen der Winkel zwischen dem Laserscanner 1 und dem Raumpunkt des Objekts mit definierter Genauigkeit bestimmt worden ist. Die Auswerteeinheit 3 weist einen Mikroprozessor und einen computerlesbaren Datenspeicher auf. Zum Betreiben des Laserscanners 1 wird ein Computerprogramm-Mittel aus dem computerlesbaren Datenspeicher der Auswertungseinheit 3 in den Mikroprozessor der Auswertungseinheit 3 geladen und ausgeführt. Vom Laserscanner 1 werden vom abgetasteten Objekt 2, 2' ermittelte Entfernungsvektoren E des abzutastenden Objekts als 3D-Tripel an die Auswertungseinheit 3 kommuniziert. Das Computerprogramm-Mittel kann auf einem Computerprogrammprodukt computerlesbar gespeichert sein, derart, dass das Computerprogramm-Mittel geeignet ist das Verfahren zum Betreiben eines Laserscanners 1 dadurch zu implementieren, dass mindestens das Bestimmen eines Nahbereichs mit mindestens zwei Raumpunkten, die in einem Winkelraum benachbart zu einem zentralen Raumpunkt sind oder eine Aggregation von Koordinaten der ermittelten Entfernungsvektoren im bestimmten Nahbereich ausgeführt wird, wenn das Computerprogramm-Mittel in den Mikroprozessor der Auswertungseinheit 3 geladen wird.

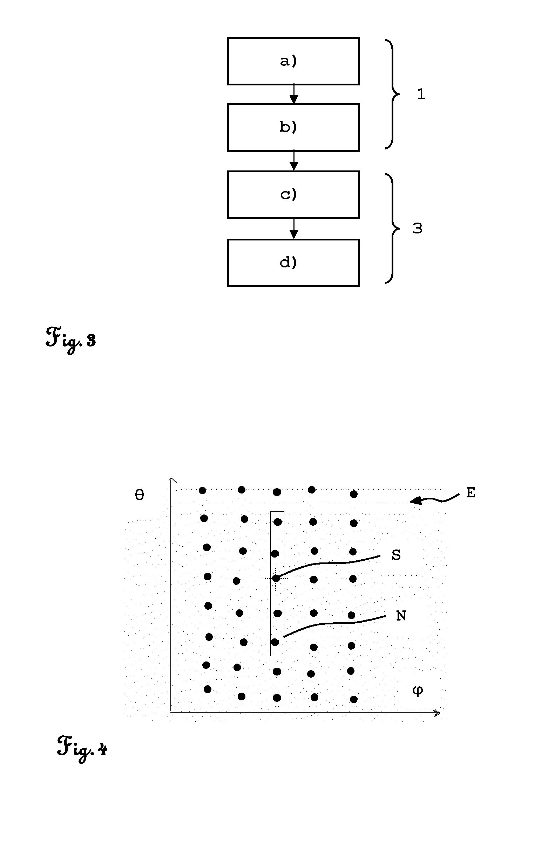

Figur 3 zeigt ein Flussdiagramm der Schritte des Verfahrens zum Betreiben des Laserscanners 1 im System mit der Auswertungseinheit 3. In einem Schritt a) wird das Abtasten von mindestens drei Raumpunkten eines Objekts und das Ermitteln eines Entfernungsvektors E mit mindestens einer Koordinate r, θ, φ vom Laserscanner 1 zum abgetasteten Raumpunkt des Objekts 2, 2' durch den Laserscanner 1 ausgeführt. In einem Schritt b) werden charakteristische Größen wie Signalamplituden Aj, die Signal-Rauschverhältnisse SRVj oder weitere statistische Merkmale der Messdaten bestimmt. Die Bezeichnung j steht dabei für die drei Koordinatenachsen r, θ, φ. Schritt b) ist optional und wird durch die Einstellung des Messablaufs oder Laserscanners 1 festgelegt. Ein Schritt c) umfasst das Bestimmen eines Nahbereichs mit mindestens zwei Raumpunkten, die in einem Winkelraum benachbart zu einem zentralen Raumpunkt sind. In einem Schritt d) wird durch das Computerprogramm-Mittel der Auswertungseinheit 3 die Aggregation von Koordinaten der ermittelten Entfernungsvektoren im bestimmten Nahbereich ausgeführt. Letztere Schritte c) und d) werden vorzugsweise für alle abgetasteten Raumpunkte ausgeführt. Ein bestehender Laserscanner 1 zum Abtasten von Raumpunkten und zum Ermitteln eines Entfernungsvektors kann mit einer Auswertungseinheit 3 oder einem Computerprogramm-Mittel zum Bestimmen eines Nahbereichs mit mindestens zwei Raumpunkten und zur Aggregation von Koordinaten der ermittelten Entfernungsvektoren im bestimmten Nahbereich nachgerüstet werden.

Die Auswerteeinheit 3 zur Bestimmung eines Nahbereichs und zur Aggregation von Raumpunkten für jeden zentralen Raumpunkt S kann im Laserscanner 1 selbst oder aber auch auf einem externen Computer lokalisiert sein. Vorzugsweise findet die Berechnung aber auf dem Laserscanner 1 direkt während der Punktaufnahme statt, was das Postprocessing erheblich vereinfacht. Auch kann durch die Online-Verbesserung die Filterung auf dem Laserscanner 1 durch Einstellungen des Operateurs angepasst werden und so beispielsweise nur die Distanzen aggregieren lassen. Dies kann vor allem bei Objekten im kurzen Distanzbereich wie bei Innenraumaufnahmen sinnvoll sein, wo die Winkelfehler die Genauigkeit der Raumpunkte kaum beeinflussen, also praktisch fehlerfrei sind. Die Streuungen der ermittelten Distanzen r sind hingegen wesentlich, sodass die vereinfachte Aggregation reduziert auf die Distanzkoordinaten r bereits eine merkbare Verbesserung der Koordinaten der Raumpunkte bewirkt.

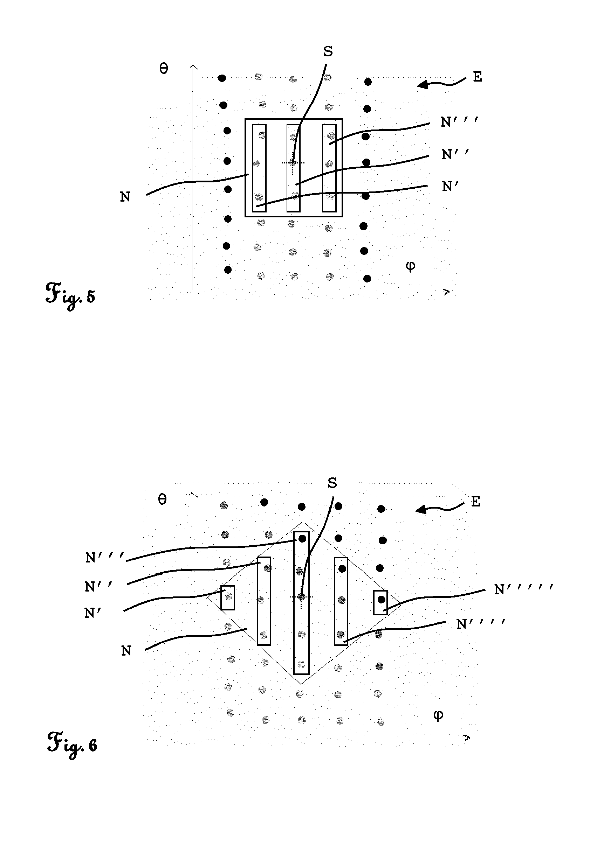

Die Figuren 4 bis 6 zeigen drei Ausführungsformen der Aggregation der Koordinaten r, θ, φ von ermittelten Entfernungsvektoren E mit der Auswertungseinheit 3. Dazu werden Distanzen r im Winkelraum des Azimutwinkels φ und des Polarwinkels θ aufgetragen. Die einzelnen, mehr oder weniger gleichmäßig voneinander beabstandeten Punkte der Figuren 4 bis 6 sind abgetastete Raumpunkte. Dabei wird der Laserstrahl 15 um die horizontale Schwenkachse 12 geschwenkt und eine erste Spalte von Raumpunkten wird von unten nach oben (oder auch umgekehrt) mit der Scannschrittgröße des Polarwinkels θ abgetastet. Nach dem Abtasten der ersten Spalte von Raumpunkten wird der Laserstrahl 15 mit einer Scannschrittgröße des Azimutwinkels φ von links nach rechts (oder auch umgekehrt) um die vertikale Schwenkachse 13 geschwenkt und eine zweite Spalte von Raumpunkten wird von unten nach oben mit der Scannschrittgröße des Polarwinkels θ abgetastet. Einzig zur klaren Darstellung sind die Distanzen r als Grauwertbild aufgetragen, wobei der Distanz r ein mehr oder weniger heller oder dunkler Grauwert zugeordnet wird; je dunkler der Grauwert, desto größer ist die Distanz r. Zudem ist zur klaren Darstellung die Distanz r eines zentralen Raumpunkts S als Referenz auf 1,00 normiert. In Figur 4 sind die Distanzen r alle weitgehend gleich dunkelgrau ($0,95 < r \leq 1,05$) und modellieren eine Ebene des abgetasteten Objekts 2, 2'. In Figur 5 sind die Distanzen r in einem mittleren Bereich grau ($0,95 < r \leq 1,05$) und in zwei äußeren Bereichen dunkelgrau ($1,05 < r \leq 1,15$) und modellieren eine Nut/einen Steg des abgetasteten Objekts 2 In Figur 6 sind die Distanzen r in einem linken unteren Bereich hellgrau ($0,85 < r \leq 0,95$); in einem mittleren Bereich sind sie grau ($0,95 < r \leq 1,05$); und in einem rechten oberen Bereich sind sie dunkelgrau ($1,05 < r \leq 1,15$) und modellieren eine Schräge des abgetasteten Objekts 2, 2'.

Zur Aggregation wird jeder abgetastete Raumpunkt einmal als zentraler Raumpunkt S verwendet, und um den zentralen Raumpunkt S wird ein Nahbereich N bestimmt. Jeder Nahbereich N weist im Winkelraum mehrere benachbarte abgetastete Raumpunkte bezogen auf den zentralen Raumpunkt S auf. In den Figuren 4 bis 6 sind die zentralen Raumpunkte S jeweils mit einem Fadenkreuz gekennzeichnet. Die im Winkelraum benachbarten abgetasteten Raumpunkte sind in nächster Nähe zum Raumpunkt S angeordnet. Bei der Aggregation der Distanzen r wird eine gewichtete Summe der Distanzen r im bestimmten Nahbereich N gebildet, so dass ein gewichtetes arithmetisches Mittel w entsteht. Somit werden positive und negative Abweichungen der Distanzen r zu im Winkelraum benachbarten abgetasteten Raumpunkte bezüglich des zentralen Raumpunkts S gemessen. Bei Kenntnis der vorliegenden Erfindung kann der Fachmann den Ablenkkopf nur um eine einzige Schwenkachse Verschwenken. Auch kann der Fachmann den Laserstrahl gleichzeitig um zwei Schwenkachsen verschwenken. Zudem kann der Fachmann auf ein Auftragen der Distanzen als Grauwertbild und auf eine Normierung der Distanzen verzichten. Auch kann der Fachmann zur Aggregation anstatt der Distanzen der ermittelten Entfernungsvektoren auch Beträge mindestens eines Winkels zwischen dem Laserscanner und dem abgetasteten Raumpunkt des Objekts verwenden. Auch kann der Fachmann zur Aggregation anstatt der Distanzen der ermittelten Entfernungsvektoren Beträge von gemessenen Intensitäten (Grauskalen) bzw. gemessenen Spektralwerten (Farben) verwenden. Natürlich kann der Fachmann zur Aggregation auch Distanzen der ermittelten Entfernungsvektoren mit Beträgen von Winkeln bzw. Beträgen von gemessenen Intensitäten (Grauskalen) bzw. Beträgen von gemessenen Spektralwerten (Farben) kombinieren.

Gemäß Figur 4 weist ein eindimensionaler Nahbereich N mindestens drei abgetastete Raumpunkte auf. Die abgetasteten Raumpunkte sind in einer Spalte mit der Scannschrittgröße des Polarwinkels θ in direkter zeitlicher Abfolge vom Laserscanner 1 abgetastet worden. Ein abgetasteter Raumpunkt wird derart als zentraler Raumpunkt S des eindimensionalen Nahbereichs N verwendet, dass mindestens ein im Winkelraum benachbarter Raumpunkt zeitlich vor dem zentralen Raumpunkt S abgetastet worden ist und dass mindestens ein im Winkelraum benachbarter Raumpunkt zeitlich nach dem zentralen Raumpunkt S abgetastet worden ist.

Heutzutage werden 3D-Messaufgaben aber auch mit zeitlich parallel erfassenden Laserscannern 1, sogenannten 3D-Kameras durchgeführt. Solche 3D-Kameras haben bildgebende Flächen-Sensoren mit pixelweisen Zeitmessschaltungen, mittels denen sie die Laufzeit oder Phasenverschiebung des vom Objekt zurückgeworfenen, modulierten Lichtkegels erfassen. In diesem Fall ist keine zeitliche Abfolge für die Vielzahl von Entfernungsvektoren E festgelegt. Es kann aber davon ausgegangen werden, dass die Speicherung der simultan erfassten Raumpunkte in einer Anordnung erfolgt, die der zeitlichen Abfolge eines seriell scannenden Instruments äquivalent ist. Der Ausdruck "zeitliche Abfolge der Raumpunkte" soll daher auch für parallel aufnehmende Laserscanner 1 gelten.

Um den Informationsgehalt des ermittelten Entfernungsvektors bei der Aggregation nicht zu verfälschen, wird ein symmetrisches Mitteln vorgenommen, d.h. im Winkelraum wird eine symmetrische Anzahl benachbarter abgetasteter Raumpunkte in Bezug zum zentralen Raumpunkt S bestimmt. Bei Verwendung einer asymmetrischen Anordnung von benachbarten abgetasteten Raumpunkten in Bezug zum zentralen Raumpunkt S kann der zu bildende Mittelwert verfälscht werden, beispielsweise eine real nicht existierende Neigung der Oberfläche des Objekts 2, 2' angeben.

Konkret weist der eindimensionale Nahbereich N der Ausführungsform nach Figur 4 fünf abgetastete Raumpunkte auf, von denen der dritte Raumpunkt als zentraler Raumpunkt S verwendet wird und zwei Raumpunkte in einer Nachbarschaft von einer bzw. zwei Scannschrittgröße/n des Polarwinkels θ zeitlich vor dem zentralen Raumpunkt S abgetastet worden sind und zwei Raumpunkte in einer Nachbarschaft von einer bzw. zwei Scannschrittgröße/n des Polarwinkels θ zeitlich nach dem zentralen Raumpunkt S abgetastet worden sind. Dieser symmetrische Nahbereich N wird aggregiert. Die Aggregation filtert mit einem Filter Θ in einer Dimension entlang der Scannschrittgröße des Polarwinkels θ um die horizontale Schwenkachse 12 des Laserscanners 1. Der Filter Θ kann einheitlich sein, d.h. jeder Raumpunkt im Nahbereich wird gleich gewichtet, was einen einheitlichen Filter $\Theta = \frac{1}{5}\begin{bmatrix} 1 & 1 & 1 & 1 & 1 \end{bmatrix}$ ergibt. Der

Filter Θ kann aber auch uneinheitlich sein, bei dem der zentrale Raumpunkte S doppelt gewichtet wird und bei dem auch die beiden Raumpunkte, die sich in nächster Nachbarschaft zum zentralen Raumpunkt S befinden, doppelt gewichtet werden, was einen zentral gewichteten Filter $\Theta = \frac{1}{8}\begin{bmatrix} 1 & 2 & 2 & 2 & 1 \end{bmatrix}$ ergibt. Der uneinheitliche Filter Θ kann auch ein parabelförmig gewichteter Filter $\Theta = \frac{1}{35}\begin{bmatrix} -3 & 12 & 17 & 12 & -3 \end{bmatrix}$ sein.

Für einen einheitlichen Filter Θ wird für den eindimensionalen Nahbereich N gemäß Formel (2) ein gleich gewichtetes arithmetisches Mittel w ermittelt:

$$w = \frac{1}{5}\begin{bmatrix} 1 & 1 & 1 & 1 & 1 \end{bmatrix} \cdot \begin{bmatrix} 10,022 & 10,002 & 10,010 & 9,097 & 10,047 \end{bmatrix}^{T} \qquad (2)$$

wobei die Werte in dem zweiten Vektor den Distanzen r der Raumpunkte im Nahbereich N vom Laserscanner 1 entsprechen.

Für einen zentral gewichteten Filter Θ wird für den eindimensionalen Nahbereich N gemäß Formel (2') ein zentral gewichtetes arithmetisches Mittel w ermittelt:

$$w = \frac{1}{8}\begin{bmatrix} 1 & 2 & 2 & 2 & 1 \end{bmatrix} \cdot \begin{bmatrix} 10{,}022 & 10{,}002 & 10{,}010 & 9{,}097 & 10{,}047 \end{bmatrix}^{T} \qquad (2')$$

Für einen parabelförmig gewichteten Filter Θ wird für den eindimensionalen Nahbereich N gemäß Formel (2") ein parabelförmig gewichtetes arithmetisches Mittel w ermittelt:

$$w = \frac{1}{35}\begin{bmatrix} -3 & 12 & 17 & 2 & -3 \end{bmatrix} \cdot \begin{bmatrix} 10{,}022 & 10{,}002 & 10{,}010 & 9{,}097 & 10{,}047 \end{bmatrix}^{T} \qquad (2'')$$

Gemäß Figur 5 setzt sich ein zweidimensionaler Nahbereich N aus drei eindimensionalen Bereichsegmenten N', N", N'" mit neun abgetasteten Raumpunkten zusammen. Jedes Bereichsegment N', N", N'" weist pro Spalte drei abgetastete Raumpunkte mit der Scannschrittgröße des Polarwinkels θ auf. Die drei Bereichsegmente N', N", N'" liegen in Nachbarschaft von kleiner/gleich zwei Scannschrittgrößen des Azimutwinkels φ zueinander. Die drei Bereichsegmente N', N", N'" können, müssen aber nicht aneinander grenzen. Ein abgetasteter Raumpunkt wird derart als zentraler Raumpunkt S des zweidimensionalen Nahbereichs N in einem zentralen Bereichsegment N" verwendet, dass mindestens ein erstes Bereichsegment N' mehrere im Winkelraum benachbarte Raumpunkte aufweist, die zeitlich vor dem zentralen Raumpunkt S abgetastet worden sind und dass mindestens ein zweites Bereichsegment N'" mehrere im Winkelraum benachbarte Raumpunkte aufweist, die zeitlich nach dem zentralen Raumpunkt S abgetastet worden sind. Die acht im Winkelraum benachbarten Raumpunkte befinden sich zum zentralen Raumpunkt S in einer beispielhaften Nachbarschaft von einer bzw. $\sqrt{2}$ Scannschrittgröße/n des Polarwinkels θ und/oder des Azimutwinkels φ. Dieser symmetrische Nahbereich N wird aggregiert. Die Aggregation filtert mit einem Filter Θ in zwei Dimensionen, nämlich entlang der Scannschrittgröße des Azimutwinkels φ um die vertikale Schwenkachse 13 des Laserscanners 1 und entlang der Scannschrittgröße des Polarwinkels θ um die horizontale Schwenkachse 12 des Laserscanners 1. Der Filter Θ kann einheitlich sein, d.h. jeder Raumpunkt im Nahbereich wird gleich gewichtet, was einen einheitlichen Filter $\Theta = \frac{1}{9}\begin{bmatrix} 1 & 1 & 1 \\ 1 & 1 & 1 \\ 1 & 1 & 1 \end{bmatrix}$ mit einer 3x3-Matrix ergibt.

Der Filter Θ kann aber auch uneinheitlich sein, der zentrale Raumpunkte S wird mit $4\left(2-\sqrt{2}\right)$ gewichtet, und die vier Raumpunkte, die sich in einer Nachbarschaft von $\sqrt{2}$ Scannschrittgrößen zum zentralen Raumpunkt S befinden, werden mit $\sqrt{2}$ gewichtet, was einen zentral gewichteten Filter $\Theta = \frac{1}{12}\begin{bmatrix} 1 & \sqrt{2} & 1 \\ \sqrt{2} & 4\left(2-\sqrt{2}\right) & \sqrt{2} \\ 1 & \sqrt{2} & 1 \end{bmatrix}$ mit einer 3x3-Matrix ergibt.

Für einen einheitlichen Filter Θ wird für den zweidimensionalen Nahbereich N gemäß Formel (3) ein gleich gewichtetes arithmetisches Mittel w ermittelt:

$$w = \sum_{i,j=1}^{3} \Theta_{i,j} \cdot r_{i,j}$$

$$= \frac{1}{9}\left(10,022 + 10,005 + 10,013 + 10,002 + 10,010 + 9,097 + 10,022 + 10,047 + 10,018\right)$$

$$(3)$$

wobei mit $r_{i,j}$ die Entfernung des j-ten Raumpunkts in der i-ten Spur des Nahbereichs bezeichnet werde. Für einen zentral gewichteten Filter $\Theta$ wird für den zweidimensionalen Nahbereich N gemäß Formel (3') ein zentral gewichtetes arithmetisches Mittel w ermittelt:

$$w = \sum_{i,j=1}^{3} \Theta_{i,j} \cdot r_{i,j}$$

$$= \frac{1}{12}\left(\begin{array}{l} 10,022 + \sqrt{2} * 10,005 + 10,013 + \sqrt{2} * 10,002 + 4 * (2 - \sqrt{2}) * 10,010... \\ ... + \sqrt{2} * 9,097 + 10,022 + \sqrt{2} * 10,047 + 10,018 \end{array}\right) \quad (3')$$

Gemäß Figur 6 wird ein zweidimensionaler Nahbereich N verwendet. Mehrere Raumpunkte werden vom Laserscanner 1 in zeitlicher Abfolge abgetastet. Ein abgetasteter Raumpunkt derart als zentraler Raumpunkt S verwendet, dass mindestens ein im Winkelraum benachbarter abgetasteter Raumpunkt zeitlich vor dem zentralen Schwerpunkt S abgetastet worden ist und dass mindestens ein im Winkelraum benachbarter abgetasteter Raumpunkt zeitlich nach dem zentralen Schwerpunkt S abgetastet worden ist. Konkret setzt sich der zweidimensionale Nahbereich N der Ausführungsform nach Figur 6 aus fünf Bereichssegmenten N', N'', N''', N'''', N''''' mit dreizehn abgetasteten Raumpunkten zusammen. Davon sind sechs im Winkelraum benachbarte Raumpunkte vor dem zentralen Schwerpunkt S abgetastet worden und sechs im Winkelraum benachbarte Raumpunkte sind zeitlich nach dem zentralen Schwerpunkt S abgetastet worden. Das erste Bereichsegment N' und das fünfte Bereichssegment N'''' weisen pro Spalte einen abgetasteten Raumpunkt auf; das zweite Bereichssegment N'' und das vierte Bereichssegment N'''' weisen pro Spalte drei abgetastete Raumpunkte mit der Scannschrittgröße des Polarwinkels $\theta$ auf; und das dritte Bereichssegment N''' weist pro Spalte fünf abgetastete Raumpunkte mit der Scannschrittgröße des Polarwinkels $\theta$ auf. Die fünf Bereichssegmente N', N'', N''', N'''', N''''' liegen in Nachbarschaft von kleiner/gleich zwei Scannschrittgrößen des Azimutwinkels $\varphi$ zueinander. Somit befinden sich die zwölf Raumpunkte zum zentralen Schwerpunkt S im Winkelraum in einer Nachbarschaft von einer bis zwei Scannschrittgröße/n des Azimutwinkels $\varphi$ und/oder des Polarwinkels $\theta$. Dieser symmetrische, aus dreizehn Entfernungsvektoren bestehende Nahbereich N wird aggregiert. Die Aggregation filtert mit einem Filter $\Theta$ in zwei Dimensionen, nämlich entlang der Scannschrittgröße des Azimutwinkels $\varphi$ um die vertikale Schwenkachse 13, entlang der Scannschrittgröße des Polarwinkels $\theta$ um die horizontale Schwenkachse 12 des Laserscanners 1. Der Filter $\Theta$ kann einheitlich sein, d.h. jeder Raumpunkt im Nahbereich wird gleich gewichtet, was einen einheitlichen Filter $\Theta = \frac{1}{13}\begin{bmatrix} 1 & 1 & 1 & 1 & 1 \\ 0 & 1 & 1 & 1 & 0 \\ 0 & 1 & 1 & 1 & 0 \\ 0 & 0 & 1 & 0 & 0 \\ 0 & 0 & 1 & 0 & 0 \end{bmatrix}$ mit einer 5x5-Matrix ergibt.

Für einen einheitlichen Filter $\Theta$ wird für den zweidimensionalen Nahbereich N gemäß Formel (4) ein gewichtetes arithmetisches Mittel w ermittelt:

$$w = \sum_{i=1}^{5} \sum_{j=1}^{5-2 \cdot |i-3|} \Theta_{i,j} \cdot r_{i,j} \qquad\qquad (4)$$

wobei mit $r_{i,j}$ die Entfernung des j-ten Raumpunkts in der i-ten Spur des Nahbereichs bezeichnet werde. Bei Kenntnis der vorliegenden Erfindung kann der Fachmann bei der Aggregation anstatt eines arithmetischen Mittels auch ein geometrisches Mittel, ein harmonisches Mittel, einen Median, usw. bilden. Auch kann der Fachmann eine Aggregation auf Basis einer Wavelet-Zerlegung, einer Fourier-Transformation, eines Kalman-Filters, unter Verwendung partieller Differentialgleichungen, Diffusionsgleichungen, der Methode der Totalvariation, usw. realisieren. Auch kann der Fachmann anstatt der beispielhaft dargestellten mehrdimensionalen Nahbereiche mit 3*3- und 5*5-Matrixen auch mehrdimensionale Nahbereiche mit 4*4-Matrix, 7*7-Matrix, usw. verwenden. Zudem kann der Fachmann anstatt eines symmetrischen Nahbereichs auch einen asymmetrischen Nahbereich verwenden, beispielsweise wenn die abgetasteten Raumpunkte nicht so symmetrisch wie in den Fig. 4 bis 6 dargestellt angeordnet sind, und somit zwangsläufig auch in der Nachbarschaft eines zentralen Raumpunkts asymmetrisch angeordnet sind, in diesem Fall kann eine ungleiche Anzahl von Raumpunkten vor und nach dem zentralen Raumpunkt abgetastet werden.

Es ist nicht zwingend, die Raumpunkte vom Laserscanner 1 mit einer vorgegebenen Scannschrittgröße des Winkels $\theta$, $\varphi$ abzutasten. Auch kann der Fachmann bei Kenntnis der Erfindung einen nicht getriggerten Laserscanner verwenden, der keine solche Scannschrittgröße aufweist.

Sollten für einzelne Scannrichtungen ($\theta$, $\varphi$) keine Messwerte von Distanzen r vorliegen, so kann der Fachmann durch Interpolation in Kombination mit der beschriebenen Aggregation geeignete Werte von Distanzen r erzeugen.

Ebenso kann der Fachmann bei Kenntnis der vorliegenden Erfindung die gemessenen Intensitäten (Grauwerte) und/oder Spektralwerte (Farben) auf dieselbe Weise aggregieren wie die Distanzen.

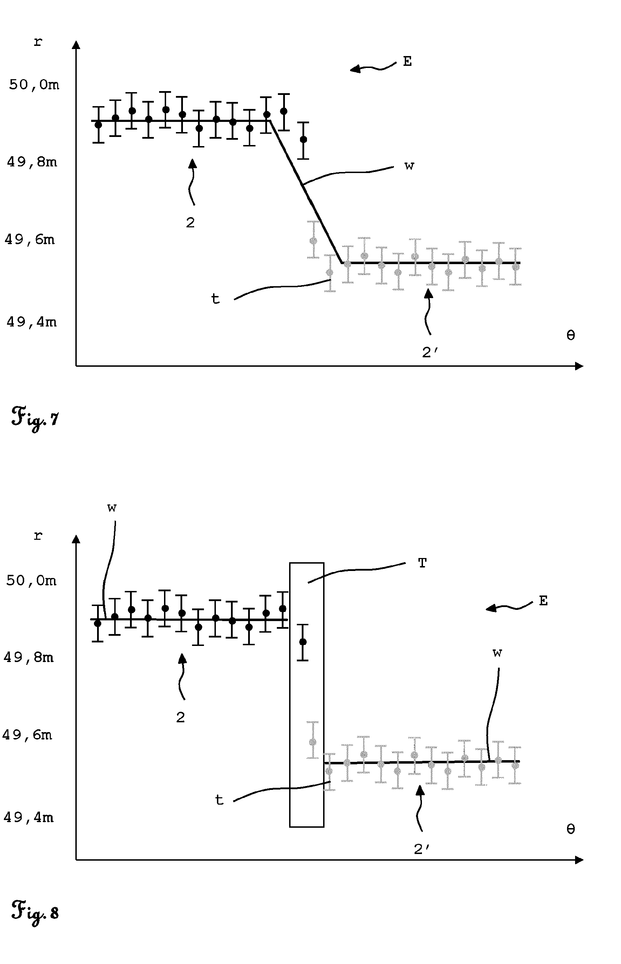

Die Figuren 7 und 8 zeigen weitere Darstellungen der Aggregation der ermittelten Entfernungsvektoren E mit der Auswertungseinheit 3. Die Ordinate gibt die Distanzen r der an die Auswertungsvorrichtung 3 kommunizierten Entfernungsvektoren E an, die Abszisse gibt den Polarwinkel $\theta$ der an die Auswertungsvorrichtung 3 kommunizierten Entfernungsvektoren E an. Im linken Bereich der ermittelten Entfernungsvektoren E liegen die Distanzen r der Entfernungsvektoren E in einem Wertebereich von 49,8m und 50, 0m zum ersten Würfel 2 nach Figur 1; im rechten Bereich der ermittelten Entfernungsvektoren E liegen die Distanzen r der Entfernungsvektoren E in einem Wertebereich 49,4m und 49,6m zum zweiten Würfel 2' nach Figur 1. Das von der Auswertungseinheit 3 ermittelte gewichtete arithmetische Mittel w ist in Figur 7 durchgehend für alle ermittelten Entfernungsvektoren E eingetragen und in Figur 8 nicht durchgehend nur für einen Teil der ermittelten Entfernungsvektoren E des linken Bereichs und des rechten Bereichs eingetragen.

Nun verdeckt der zweite Würfel 2', der beispielsweise einen Baum schematisiert, teilweise das Sichtfeld des Laserscanners 1 auf den ersten Würfel 2, der beispielsweise ein Gebäude schematisiert. Gerade im Übergangsbereich des Sichtfelds des Laserscanners 1 vom zweiten Würfel 2' zum ersten Würfel 2, verfälscht die Aggregation der Koordinaten r, $\theta$, $\varphi$ von ermittelten Entfernungsvektoren E den Informationsgehalt der ermittelten Entfernungsvektoren E, indem sie den sprunghaften Übergang der Distanzen r in einen fließenden Übergang des arithmetischen Mittels w aggregiert, welcher real nicht existiert.

Um solche Verfälschungen zu vermeiden, werden gemäß Figur 8 ein Nahbereich N nur für solche Raumpunkte bestimmt und Koordinaten (r, $\theta$, $\varphi$) aggregiert, deren gemessene Distanzen r sich von der im zentralen Raumpunkt S gemessenen Distanz $r_0$ um nicht mehr als einen vordefinierten Schwellenwert t unterscheiden; in einem mittleren Ausschlussbereich T ist daher für die ermittelten Entfernungsvektoren E kein gewichtetes arithmetisches Mittel w eingetragen.

Der Schwellenwert t des zentralen Raumpunkts S ist in Figur 7 und 8 als Balken eingetragen. Die Länge des Balkens entspricht dem Schwellenwert t und beträgt einheitlich 0,10m.

Der Schwellenwert t setzt sich gemäß Gleichung (5) aus einer Summe eines konstanten Verschiebungswerts $t_0$ und eines Messwerts $t_1$ zusammen.

$$t = t_0 + t_1 \qquad\qquad (5)$$

In einer ersten Ausführungsform ist der Messwert $t_1$ proportional zu der vom Detektor 17 gemessenen Amplitude A des erfassten Lichts 15'. Die Amplitude A hängt von mehreren Parametern wie der Reflektivität der Oberfläche des Objekts 2, 2', der Distanz r zwischen dem Laserscanner 1 und dem Objekt 2, 2', dem Einfallswinkel des Lichts 15 auf das Objekt 2, 2', usw. ab. Für jeden ermittelten Entfernungsvektor E zwischen dem Laserscanner 1 und dem abgetasteten Raumpunkt wird die vom Detektor 17 gemessene Amplitude A mit dem 3D-Tripel des ermittelten Entfernungsvektors E auf dem computerlesbaren Datenspeicher gespeichert. Andere Exponenten sind möglich. Anstelle der inversen Proportionalität:

$$t_1 \sim A^{-1} \qquad\qquad (6)$$

kann auch ein Zusammenhang:

$$t_1 \sim A^{-1/2} \qquad\qquad (6')$$

$$t_1 \sim A^{-3/2} \qquad\qquad (6'')$$

verwendet werden. Allgemein ist der Messwert $t_1$ proportional zu einer Potenz der gemessenen Amplitude A mit einem beliebigen reellen Exponenten. Anstelle der vom Detektor 17 gemessenen Amplitude A eines ermittelten Entfernungsvektors E kann auch eine gemittelte Amplitude A' der gemessenen Amplituden A von mehreren ermittelten Entfernungsvektoren E verwendet werden.

In einer zweiten Ausführungsform wird der Messwert $t_1$ zu einem Signal-Rausch-Verhältnis SRV des erfassten Lichts 15' abgeleitet. Beispielsweise ist der Messwert $t_1$ invers proportional zum Signal-Rausch-Verhältnis SRV des erfassten Lichts 15' wie in der Formel (7) dargestellt.

$$t_1 \sim SRV^{-1} \qquad\qquad (7)$$

Auch hier sind andere Exponenten des Signal-Rausch-Verhältnisses SRV möglich.
In einer dritten Ausführungsform ist der Schwellenwert t proportional zu einer Differenz eines Parameters p und der Distanz r vom Laserscanner 1 zum abgetasteten Raumpunkt wie in der Formel (8) dargestellt.

$$t \sim (p-r)^{-1} \qquad\qquad (8)$$

Die Differenz kann natürlich auch andere Exponenten haben.
In einer weiteren Ausführungsform kann der Schwellenwert t auch abhängig von der lokalen Krümmung (1. Ordnung oder höherer Ordnung) des gescannten Objekts gewählt werden.
Da der Entfernungsvektor E im generellen Fall ein 3D-Tripel bezogen auf ein $(r, \theta, \varphi)$-Koordinatensystem darstellt, gibt es grundsätzlich drei Schwellwerte t, den beschriebenen für r, aber auch einen für $\theta$ und einen für $\varphi$. Alle drei Schwellenwerte t lassen sich aus den statistischen Signalkennwerten A, $SRV_r$, $SRV_\theta$, $SRV_\varphi$ und den objekt-bezogenen Trajektorien der Raumpunktfolgen wie beispielsweise der diskutierten lokalen Krümmung ableiten. Beispielsweise lauten die Schwellwerte t_j gemäß Formel (9):

$$t\_j = function(A, \; SRVj, \; \ldots) \qquad\qquad (9)$$

Dabei steht A für die Signalamplitude der Distanzmessung, SRVj für statistische Rauschangaben der Koordi-

natenmesswerte r, θ, φ. Im einfachsten Fall kann die Streuung als 2. Moment der statistischen Verteilung der jeweiligen Variable eingesetzt werden.

Für abgetastete Raumpunkte, die im Ausschlussbereich T die Grenze des Schwellenwerts t überschreiten, kann der Filter Θ angepasst werden. Falls beispielsweise im zweidimensionalen Nahbereich N gemäß Figur 5 der dritte Raumpunkte im ersten Bereichsegment N' und der erste Raumpunkt im dritten Bereichsegment N" die Grenze des Schwellenwerts t überschreiten, kann der einheitliche Filter $\Theta = \dfrac{1}{9}\begin{bmatrix} 1 & 1 & 1 \\ 1 & 1 & 1 \\ 1 & 1 & 1 \end{bmatrix}$ gemäß Formel (3) durch einen adaptierten Filter $\Theta = \dfrac{1}{7}\begin{bmatrix} 0 & 1 & 1 \\ 1 & 1 & 1 \\ 1 & 1 & 0 \end{bmatrix}$ ersetzt werden, der diese, die Grenzen des Schwellenwerts t überschreitenden Raumpunkte nicht berücksichtigt. Entsprechend kann der zentral gewichtende Filter

$$\Theta = \dfrac{1}{12}\begin{bmatrix} 1 & \sqrt{2} & 1 \\ \sqrt{2} & 4(2-\sqrt{2}) & \sqrt{2} \\ 1 & \sqrt{2} & 1 \end{bmatrix}$$ gemäß Formel (3') durch einen adaptierten Filter

$$\Theta = \dfrac{1}{10}\begin{bmatrix} 0 & \sqrt{2} & 1 \\ \sqrt{2} & 4(2-\sqrt{2}) & \sqrt{2} \\ 1 & \sqrt{2} & 0 \end{bmatrix}$$ ersetzt werden, der diese, die Grenzen des Schwellenwerts t überschreitenden Raumpunkte nicht berücksichtigt. Vorteilhafterweise ist der adaptierte Filter symmetrisch, d.h. falls beispielsweise im zweidimensionalen Nahbereich N gemäß Figur 5 nur der dritte Raumpunkte im ersten Bereichsegment N' die Grenze des Schwellenwerts t überschreitet, wird aus Symmetriegründen auch der erste Raumpunkt im dritten Bereichsegment N" nicht berücksichtigt.

In einer weiteren Ausführungsform kann auch die Größe und die Gewichtung des Filters in Abhängigkeit von den gemessenen Distanzen, Amplituden und dem SNR bestimmt werden, so dass beispielsweise für kleine und große Distanzen unterschiedliche Filter verwendet werden.

In einer anderen Ausführungsform kann das Filter derart ausgelegt sein, dass die Mittelung der 3D-Punkte nicht nur auf den Distanzmesswerten sondern auf allen drei Messkoordinaten r, θ, φ erfolgt, dabei wird beispielsweise eine der Formeln (2), (2'), (2"), (3), (3') für jede der Koordinaten r, θ, φ angewendet.

Es versteht sich, dass diese dargestellten Figuren nur mögliche Ausführungsformen schematisch darstellen. Die verschiedenen Ansätze können ebenso miteinander sowie mit Verfahren und Geräten des Standes der Technik kombiniert werden. Insbesondere können die Ausführungsformen des Schwellenwerts miteinander kombiniert werden.

**Patentansprüche**

1.  Verfahren zum Betreiben eines Laserscanners (1), mit den folgenden Schritten:

    - Abtasten von mindestens drei Raumpunkten eines Objekts (2, 2') ;
    - Ermitteln eines Entfernungsvektors (E) mit mindestens einer Koordinate (r, θ, φ) vom Laserscanner (1) zum abgetasteten Raumpunkt des Objekts (2);
    **gekennzeichnet durch** ein
    - Bestimmen eines Nahbereichs (N) mit mindestens zwei Raumpunkten, die in einem Winkelraum benachbart zu einem zentralen Raumpunkt (S) sind; und eine
    - Aggregation von Koordinaten (r, θ, φ) der ermittelten Entfernungsvektoren (E) im bestimmten Nahbereich (N).

2.  Verfahren nach Anspruch 1, **dadurch gekennzeichnet,**

**dass** als Koordinate $(r, \theta, \varphi)$ eine Distanz $(r)$ und/oder mindestens ein Winkel $(\theta, \varphi)$ verwendet wird.

3. Verfahren nach Anspruch 1 oder 2, **dadurch gekennzeichnet,**
**dass** die Koordinate $(r, \theta, \varphi)$ des ermittelten Entfernungsvektors (E) zum zentralen Raumpunkt (S) durch die Aggregation von Koordinaten $(r, \theta, \varphi)$ der ermittelten Entfernungsvektoren (E) im bestimmten Nahbereich (N), vorzugsweise durch einen Mittelwert (w) von Koordinaten $(r, \theta, \varphi)$ der ermittelten Entfernungsvektoren (E) im bestimmten Nahbereich (N), ersetzt wird.

4. Verfahren nach einem der Ansprüche 1 bis 3, **dadurch gekennzeichnet,**
**dass** die Aggregation von Koordinaten $(r, \theta, \varphi)$ der ermittelten Entfernungsvektoren (E) im bestimmten Nahbereich (N) durch einen einstellbaren Filter $(\Theta)$ gewichtet wird.

5. Verfahren nach Anspruch 4, **dadurch gekennzeichnet,**
**dass** die Raumpunkte im Nahbereich (N) vom Filter $(\Theta)$ gleich gewichtet werden; oder
**dass** die Raumpunkte im Nahbereich (N) vom Filter $(\Theta)$ ungleich gewichtet, vorzugsweise zentral gewichtet, vorzugsweise parabelförmig gewichtet werden.

6. Verfahren nach einem der Ansprüche 1 bis 5, **dadurch gekennzeichnet,**
**dass** nur für solche Raumpunkte ein Nahbereich (N) bestimmt wird und Koordinaten $(r, \theta, \varphi)$ aggregiert werden, deren gemessene Distanzen $(r)$ sich von der im zentralen Raumpunkt (S) gemessenen Distanz $(r_0)$ um nicht mehr als einen vordefinierten Schwellenwert $(t)$ unterscheiden.

7. Verfahren nach Anspruch 6, **dadurch gekennzeichnet,**
**dass** ein Schwellenwert $(t)$ verwendet wird, der eine Summe aus einem konstanten Verschiebungswert $(t_0)$ und einem Messwert $(t_1)$ aufweist.

8. Verfahren nach Anspruch 7, **dadurch gekennzeichnet,**
**dass** ein Messwert $(t_1)$ verwendet wird, der invers proportional zu einer gemessenen Amplitude (A) des erfassten Lichts (15') ist; und/oder
**dass** ein Messwert $(t_1)$ verwendet wird, der proportional zu einer Potenz einer gemessenen Amplitude (A) des erfassten Lichts (15') mit einem reellen Exponenten ist; und/oder
**dass** ein Messwert $(t_1)$ verwendet wird, der vom Signal-Rausch-Verhältnis (SRV) des erfassten Lichts (15') abgeleitet wird.

9. Verfahren nach Anspruch 6, **dadurch gekennzeichnet,**
**dass** die Aggregation von Koordinaten $(r, \theta, \varphi)$ der ermittelten Entfernungsvektoren (E) im bestimmten Nahbereich (N) durch einen einstellbaren Filter $(\Theta)$ gewichtet wird; und
**dass** abgetastete Raumpunkte, deren gemessene Distanzen $(r)$ sich von der im zentralen Raumpunkt (S) gemessenen Distanz $(r_0)$ um mehr als einen vordefinierten Schwellenwert $(t)$ unterscheiden, durch einen adaptierten Filter $(\Theta)$ herausgefiltert werden.

10. Verfahren nach einem der Ansprüche 1 bis 9, **dadurch gekennzeichnet,**
**dass** mindestens drei Raumpunkte in zeitlicher Abfolge vom Laserscanner (1) abgetastet werden; und
**dass** unter Verwendung dieser abgetasteten Raumpunkte ein Nahbereich (N) bestimmt wird, bei dem mindestens ein abgetasteter Raumpunkt zeitlich vor dem zentralen Raumpunkt (S) abgetastet worden ist und mindestens ein abgetasteter Raumpunkt zeitlich nach dem zentralen Raumpunkt (S) abgetastet worden ist.

11. Verfahren nach Anspruch 10, **dadurch gekennzeichnet,**
**dass** ein im Winkelraum symmetrischer Nahbereich (N) bestimmt wird; oder
**dass** ein im Winkelraum asymmetrischer Nahbereich (N) bestimmt wird.

12. Verfahren nach einem der Ansprüche 1 bis 11, **dadurch gekennzeichnet,**
**dass** die Raumpunkte vom Laserscanner (1) mit einer Scannschrittgröße eines Winkels $(\theta, \varphi)$ abgetastet werden; und
**dass** unter Verwendung dieser abgetasteten Raumpunkte ein Nahbereich (N) bestimmt wird, bei dem alle abgetasteten Raumpunkte kleiner/gleich zwei Scannschrittgrößen des Winkels $(\theta, \varphi)$ um den zentralen Raumpunkt (S) benachbart sind; oder
**dass** die Raumpunkte vom Laserscanner (1) in mindestens drei Bereichsegmenten (N', N'', N''', N'''', N''''') mit der Scannschrittgröße eines ersten Winkels $(\theta)$ abgetastet werden; und

**dass** unter Verwendung dieser Bereichsegmente (N', N'', N''') ein Nahbereich (N) bestimmt wird, bei dem alle Bereichsegmente (N', N'', N''', N'''', N''''') kleiner/gleich zwei Scannschrittgrößen eines zweiten Winkels ($\varphi$) zueinander benachbart sind.

13. Verwendung eines Laserscanners (1) zum Durchführen des Verfahrens nach einem der Ansprüche 1 bis 12.

14. System, das zum Durchführen des Verfahrens nach einem der Ansprüche 1 bis 12 geeignet ist, das einen Laserscanner (1) umfasst, **dadurch gekennzeichnet,**
**dass** vom Laserscanner (1) die Schritte:

- Abtasten von mindestens drei Raumpunkten eines Objekts (2, 2') ;
- Ermitteln eines Entfernungsvektors (E) mit mindestens einer Koordinate (r, $\theta$, $\varphi$) vom Laserscanner (1) zum abgetasteten Raumpunkt des Objekts (2);

ausführbar sind; und
**dass** das System eine Auswertungseinheit (3) umfasst, von welcher Auswertungseinheit (3) mindestens einer der Schritte:

- Bestimmen eines Nahbereichs (N) mit mindestens zwei Raumpunkten, die in einem Winkelraum benachbart zu einem zentralen Raumpunkt (S) sind;
- Aggregation von Koordinaten (r, $\theta$, $\varphi$) der ermittelten Entfernungsvektoren (E) im bestimmten Nahbereich (N) ausführbar ist.

15. Computerprogrammprodukt, umfassend ein Computerprogramm-Mittel, das geeignet ist das Verfahren nach einem der Ansprüche 1 bis 12 dadurch zu implementieren, dass mindestens einer der Schritte:

- Bestimmen eines Nahbereichs (N) mit mindestens zwei Raumpunkten, die in einem Winkelraum benachbart zu einem zentralen Raumpunkt (S) sind;
- Aggregation von Koordinaten (r, $\theta$, $\varphi$) der ermittelten Entfernungsvektoren (E) im bestimmten Nahbereich (N) ausgeführt wird, wenn das Computerprogramm-Mittel in einen Mikroprozessor einer Auswertungseinheit (3) geladen wird.

14'

12

1

11, 11'

15, 15'

2

2'

13

Fig. 1

14' 14

15 15''

16

12

12'

1

18

15'

11, 11'

17

19

3

13'

Fig. 2

13

Fig. 3

Fig. 4

Fig. 5

Fig. 6

**Fig. 7**

**Fig. 8**

Europäisches
Patentamt

European
Patent Office

Office européen
des brevets

## EUROPÄISCHER RECHERCHENBERICHT

Nummer der Anmeldung

EP 11 19 1195

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 644 386 A (JENKINS GARY KIM [US] ET AL) 1. Juli 1997 (1997-07-01) * Spalte 4, Zeile 46 - Zeile 67 * * Spalte 5, Zeile 20 - Zeile 44 * ----- | 1-5,10, 11,13-15 | INV. G01S17/42 G01S17/89 G01C15/00 |
| X | DE 10 2010 020925 A1 (FARO TECH INC [US]) 10. November 2011 (2011-11-10) * Abbildungen 2,4 * * Absatz [0022] - Absatz [0029] * ----- | 1-6, 9-11, 13-15 | |
| X | SERBAN OPRISESCU ET AL: "Measurements with ToF Cameras and Their Necessary Corrections", SIGNALS, CIRCUITS AND SYSTEMS, 2007. ISSCS 2007. INTERNATIONAL SYMPOSI UM ON, IEEE, PI, 1. Juli 2007 (2007-07-01), Seiten 1-4, XP031128576, ISBN: 978-1-4244-0968-6 * Page 1, Section "Introduction"; Page 3, left-hand column, line 5 - right-hand column, line 13 * ----- | 1-5,10, 11,13-15 | |
| X | US 2009/190007 A1 (OGGIER THIERRY [CH] ET AL) 30. Juli 2009 (2009-07-30) * Abbildungen 1,3 * * Absatz [0019] - Absatz [0021] * * Absatz [0031] - Absatz [0038] * ----- | 1-5,10, 11,13-15 | |

RECHERCHIERTE SACHGEBIETE (IPC)

G01C
G01S

Der vorliegende Recherchenbericht wurde für alle Patentansprüche erstellt

| Recherchenort | Abschlußdatum der Recherche | Prüfer |
|---|---|---|
| Den Haag | 14. Mai 2012 | Niemeijer, Reint |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes
  Dokument

EPO FORM 1503 03.82 (P04C03)

EP 2 600 173 A1

**ANHANG ZUM EUROPÄISCHEN RECHERCHENBERICHT
ÜBER DIE EUROPÄISCHE PATENTANMELDUNG NR.**

EP 11 19 1195

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-05-2012

| Im Recherchenbericht angeführtes Patentdokument | | Datum der Veröffentlichung | Mitglied(er) der Patentfamilie | | Datum der Veröffentlichung |
|---|---|---|---|---|---|
| US 5644386 | A | 01-07-1997 | GB | 2297008 A | 17-07-1996 |
| | | | US | 5644386 A | 01-07-1997 |
| DE 102010020925 | A1 | 10-11-2011 | KEINE | | |
| US 2009190007 | A1 | 30-07-2009 | EP | 2240798 A1 | 20-10-2010 |
| | | | US | 2009190007 A1 | 30-07-2009 |
| | | | WO | 2009097516 A1 | 06-08-2009 |

EPO FORM P0461

Für nähere Einzelheiten zu diesem Anhang : siehe Amtsblatt des Europäischen Patentamts, Nr.12/82

19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10150436 A1